# FASCICULE DE BREVET EUROPEEN

(11) **EP 0 900 692 B1**
(45) Date de publication et mention de la délivrance du brevet: **04.12.2002**
(21) Numéro de dépôt: 98810892.4
(22) Date de dépôt: 08.09.1998
(51) Int. Cl.: B60P 1/64, B60P 7/13

(54) **Ensemble formé d'un équipement de carrosserie amovible et d'un véhicule porteur, procédé d'accouplement d'un tel ensemble, ainsi qu'équipement de carrosserie et véhicule en tant que parties du dit ensemble**
Einheit aus abnehmbarer Karosseriebaugruppe und Trägerfahrzeug, Methode zum Kuppeln einer derartigen Einheit, sowie mit einer solchen Einheit ausgerüstetes Fahrzeug
Assembly of a removable equipment and a carrying vehicle, method of coupling of such a unit, as well as a vehicle with such an equipment

(30) Priorité: 08.09.1997 CH 210597
(43) Date de publication de la demande: 10.03.1999
(73) Titulaire: Lanza, Giovanni, 1844 Villeneuve (CH)
(72) Inventeur: Lanza, Giovanni, 1844 Villeneuve (CH)
(74) Mandataire: Ganguillet, Cyril

(56) Documents cités:
- WO-A-97/31801
- DE-U- 9 204 714
- FR-A- 1 264 174

## Description

La présente invention concerne un ensemble formé d'une part d'un équipement de carrosserie amovible, disposé sur un châssis (appelé ci-après "châssis volant" pour des facilités de lecture), et d'autre part d'un véhicule comportant un châssis porteur, l'ensemble comprenant un dispositif de levage du châssis volant et au moins deux pièces de blocage, chacune des dites pièces de blocage étant solidaire de l'un quelconque des châssis et agencée de façon à coopérer avec dès organes du châssis opposé lorsque les deux parties de l'ensemble se trouvent l'une par rapport à l'autre dans une position autorisant la mise en coopération des pièces de blocage avec lesdits organes du châssis opposé. L'invention concerne également équipement de carrosserie, disposé sur un châssis volant, ainsi qu'un véhicule comportant un châssis porteur en tant que parties du dit ensemble. L'invention concerne aussi un procédé d'accouplement d'un équipement de carrosserie amovible, disposé sur un châssis volant, avec un véhicule comportant un châssis porteur.

Dans l'industrie des transports routiers en particulier, il est souvent utile de pouvoir dissocier la partie roulante d'un véhicule, châssis-cabine ou châssis-remorque, de sa partie proprement fonctionnelle, principalement une benne ou un conteneur.

Pour répondre à ce besoin, on connaît essentiellement trois types d'aménagements. Un premier type a recours à une grue, indépendante ou montée sur le véhicule, qui permet de lever et manoeuvrer la benne ou le conteneur. Un deuxième type consiste à faire glisser ou à riper la benne au moyen d'un treuil ou d'un bras articulé. Ce système est surtout utilisé pour les bennes de chantier. Un troisième type prévoit d'équiper principalement des conteneurs de béquilles pivotantes sur lesquelles le conteneur peut reposer à une hauteur suffisante pour que la partie roulante du véhicule puisse avancer sous le conteneur pour s'en dégager, ou reculer pour le prendre en charge. Ce dernier système est surtout utilisé pour des camions de déménagement.

Dans les trois cas, des moyen de blocage/verrouillage sont prévus pour solidariser les deux parties du véhicule en configuration de circulation.

Un aménagement du premier type mentionné ci-dessus est décrit dans le brevet FR 1.264.174 qui concerne une remorque constituée d'un châssis porteur extensible dont les deux parties coulissent l'une dans l'autre et sur lequel peut être déposée une caisse de fourgon. Le dispositif de fixation de la caisse sur le châssis porteur comprend deux pièces de blocage, fixées respectivement sur chacune des parties du châssis porteur et qui s'engagent dans la caisse lors de l'extension du châssis, de façon à assurer le blocage et le verrouillage de la caisse sur le châssis.

Cette technologie déjà ancienne des châssis télescopiques possède à l'évidence un certain nombre d'inconvénients qui constituent des obstacles incontournables à son développement. Ainsi, la structure d'un châssis porteur coulissant est d'une fragilité telle qu'elle rend sa mise en action très délicate, voire même impossible sur un terrain accidenté. En particulier l'extension et la contraction du châssis modifie l'empattement du véhicule, ce qui oblige à repenser totalement sa conception mécanique, en particulier celle du système de transmission et de freinage. D'autre part l'aménagement décrit dans ce brevet nécessite un positionnement et un alignement précis de la caisse au-dessus du châssis porteur avant le dépôt de la caisse sur le châssis.

Des exemples d'aménagement du troisième type mentionné ci-dessus sont décrits dans le modèle d'utilité allemand G 92 04 714.3 et dans la demande de brevet WO 97/31801, ce dernier document concernant un conteneur à béquilles pivotantes qui coopère avec un dispositif d'arrimage du conteneur sur le châssis d'un véhicule. Toutefois, compte tenu de sa conception, notamment l'utilisation de vérins placés sur le châssis porteur pour régler la descente du conteneur sur ledit châssis porteur, ce système ne peut fonctionner correctement que sur un terrain plat et quasi horizontal.

L'ensemble qui fait l'objet de l'invention a été développé pour répondre plus particulièrement à certains besoins, ce qui n'exclut nullement d'ailleurs qu'il puisse s'avérer avantageux pour d'autres utilisations. Il arrive en effet de plus en plus souvent qu'un conteneur ne serve pas au simple transport de marchandises, mais qu'il soit au contraire muni d'un équipement technique particulier, le cas échéant fort sophistiqué et de grande valeur s'il s'agit par exemple d'un véritable laboratoire ambulant. On peut citer dans cet ordre d'idées toute cellule d'assistance à la protection civile ou militaire, telles que des cellules d'assistance médicale, des cellules d'assistance pour incendie ou des cellules d'assistance en cas d'alerte chimique. Ce peut être aussi des cellules jouant le rôle de poste de commandement, d'hôpital de campagne, de sanitaires, de bureaux, de logements.

Pour ce genre de conteneur à valeur ajoutée quelquefois très haute, la notion de transport n'est pas en soi essentielle. En effet, s'il est bien sûr nécessaire de pouvoir déplacer le conteneur jusqu'à l'endroit où l'on en a besoin, c'est surtout la présence de l'équipement technique embarqué qui est souhaitée. De ce fait, la partie roulante du véhicule est inutile, voire pénalisante, dès que l'équipement embarqué entre en fonction, ce qui est son but.

Les systèmes à bras articulé ou à treuil maltraitent sérieusement la partie amovible du véhicule en lui imprimant des chocs parfois très violents et la faisant passer dans tous les cas par des positions à forte inclinaison pour le moins acrobatiques. On ne peut donc y installer que des équipements très endurants et cela réduit dramatiquement le champ d'application du système.

D'un autre côté, la technique du conteneur à béquilles chahuterait moins l'équipement embarqué, mais elle présente d'autres inconvénients rédhibitoires. En effet, pour effectuer les opérations d'arrimage et désarrimage du conteneur, il faut nécessairement disposer d'un terrain vaste, plat et de préférence horizontal. Dans le domaine des déménagements, cette contrainte est minime. En revanche, pour les secours en cas de catastrophe, par exemple, on n'a pas du tout le choix du terrain de manoeuvre. De plus, les interventions sont en général réalisées dans l'urgence et il n'est donc pas question de perdre du temps ou de prendre des risques dans une manoeuvre requérant trop de précision et de doigté. De surcroît, une fois perché sur ses béquilles, le conteneur n'est pas d'un accès facile pour l'utilisateur.

Or, dans les situations d'urgence, rapidité, simplicité et fiabilité sont des mots d'ordre incontournables qui doivent s'appliquer également à la mise à disposition des conteneurs spécifiques sur le terrain de manoeuvre. Ainsi, toutes les opérations délicates d'arrimage consistant à lever un conteneur, à le positionner et à le bloquer sur le châssis d'un véhicule pour permettre au véhicule de prendre la route, et, bien sûr, les opérations inverses de désarrimage du conteneur et de sa dépose sur un terrain quelconque doivent être d'une simplicité extrême, afin de pouvoir être mise en oeuvre très rapidement, de façon fiable et en toute sécurité par toute personne, ceci sans avoir recours à une aide extérieure.

C'est pourquoi, dans la pratique, les services d'intervention, lorsqu'ils n'utilisent pas des véhicules comportant des conteneurs montés à demeure sur le châssis du véhicule, utilisent le plus souvent des véhicules à bras articulé, quitte à se priver du matériel plus fragile dont ils ont pourtant besoin.

Cette situation n'est à l'évidence pas satisfaisante et c'est le but de la présente invention que de proposer un ensemble qui offre une manoeuvrabilité égale ou supérieure à celle des systèmes à bras articulé, mais qui offre aussi le confort des conteneurs à béquilles pivotantes. Exprimé d'une autre façon, l'ensemble selon l'invention s'attache à réunir les avantages des systèmes connus, tout en éliminant une grande partie de leurs inconvénients connus. Plus précisément, l'ensemble selon l'invention allie la souplesse de guidage des systèmes à bras articulé à la stabilité des systèmes à béquilles tout en éliminant tant l'aspect chaotique propre aux systèmes à bras articulé que la rigueur de manoeuvre contraignante des systèmes à béquilles pivotantes, de même que leur aspect haut perché.

A cet effet, la présente invention concerne un ensemble tel que défini à la revendication 1. Des formes d'exécution particulières de l'ensemble selon l'invention sont définies dans les revendications dépendantes 2 à 11.

L'invention concerne également un équipement de carrosserie amovible, disposé sur un châssis volant, ainsi qu'un véhicule comportant un châssis porteur, tels que définis respectivement aux revendications 12 et 14.

L'invention concerne aussi un procédé d'accouplement d'un équipement de carrosserie amovible, disposé sur un châssis volant, avec un véhicule comportant un châssis porteur tel que défini à la revendication 16.

Afin rendre facile la compréhension de l'invention, un dessin représentant un mode de réalisation d'un ensemble selon l'invention est présenté. Cela n'en limite pas pour autant la portée de cette invention.

Sur ce dessin,
- les figures 1a à 1d illustrent de façon schématique différentes étapes de l'arrimage de l'équipement de carrosserie sur le véhicule porteur, la figure le représentant le véhicule lorsque le chargement est terminé;
- les figures 2a à 2c représentent, par des vues partielles en coupe, le véhicule porteur de la figure le lorsque l'équipement de carrosserie vient d'être posé dans une position quelconque sur le châssis porteur, la figure 2a étant une vue en coupe verticale longitudinale, la figure 2b étant une vue en coupe horizontale réalisée au niveau du châssis porteur du véhicule porteur et la figure 2c étant une vue de face transversale réalisée au niveau d'une paire de béquilles;
- les figures 3a à 3c sont des vues en coupe correspondant à celles des figures 2a à 2c après que l'équipement de carrosserie a été positionné et bloqué sur le véhicule porteur;
- les figures 4a à 4c sont des vues en coupe correspondant à celles des figures 2a à 2c après que l'équipement de carrosserie a été débloqué du véhicule porteur; et

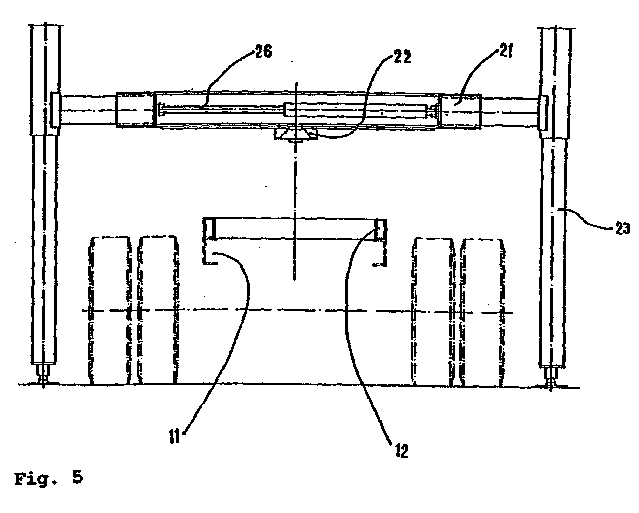

- la figure 5 est une vue en coupe transversale représentant l'équipement de carrosserie en position élevée par rapport au véhicule porteur.

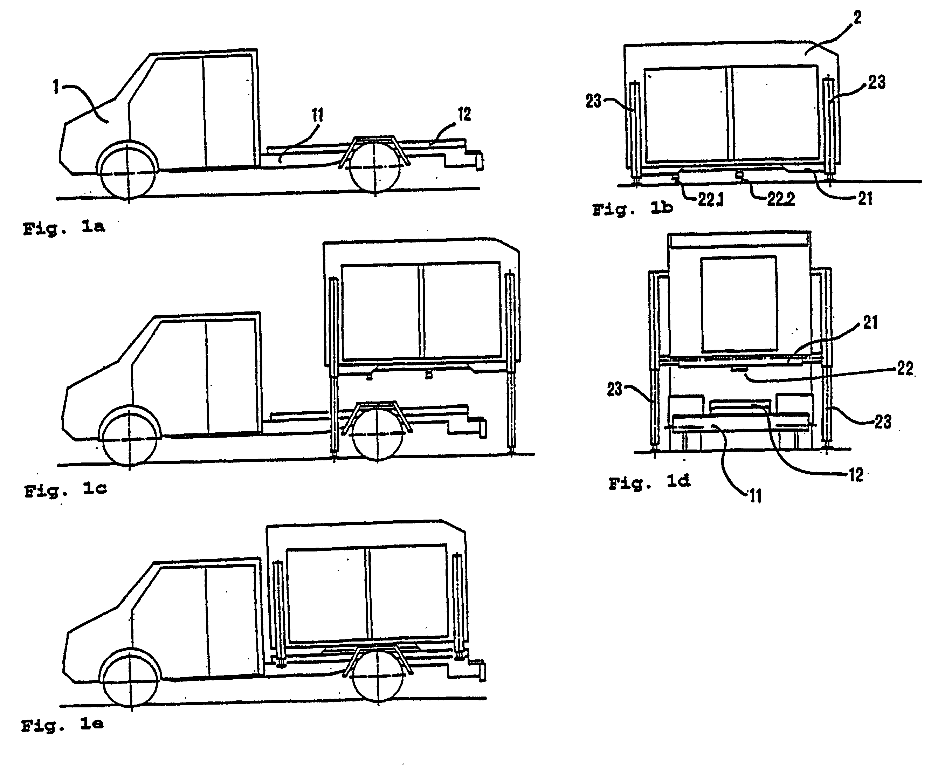

Au regard de la figure 1a, le châssis porteur 11 du véhicule 1 comporte des longerons sur lesquels repose un faux-châssis porteur 12 dont la structure est agencée de manière à porter certains éléments du dispositif d'arrimage et à coopérer avec certains autres éléments de ce dispositif.

Au regard de la figure 1b, l'équipement de carrosserie 2 repose sur un châssis volant 21 dont la structure est agencée de manière à porter certains éléments du dispositif d'arrimage et à coopérer avec certains autres éléments de ce dispositif lorsque ledit châssis volant sera posé sur le véhicule porteur.

L'ensemble comporte des pièces de blocage 22 dont l'une au moins se trouve de préférence montée fixe sur l'un des châssis porteur ou volant. Au moins une autre pièce de blocage est mobile par rapport à ladite pièce fixe.

Par pièce de blocage, on entend tout élément ou pièce venant buter contre un réceptacle fixe et y trouver logement.

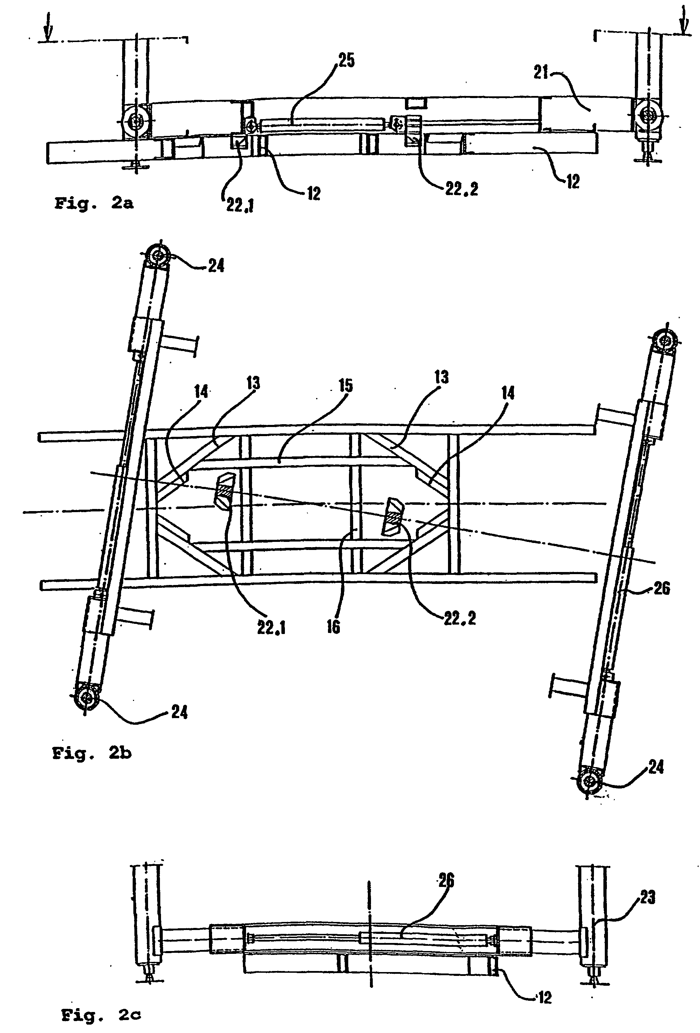

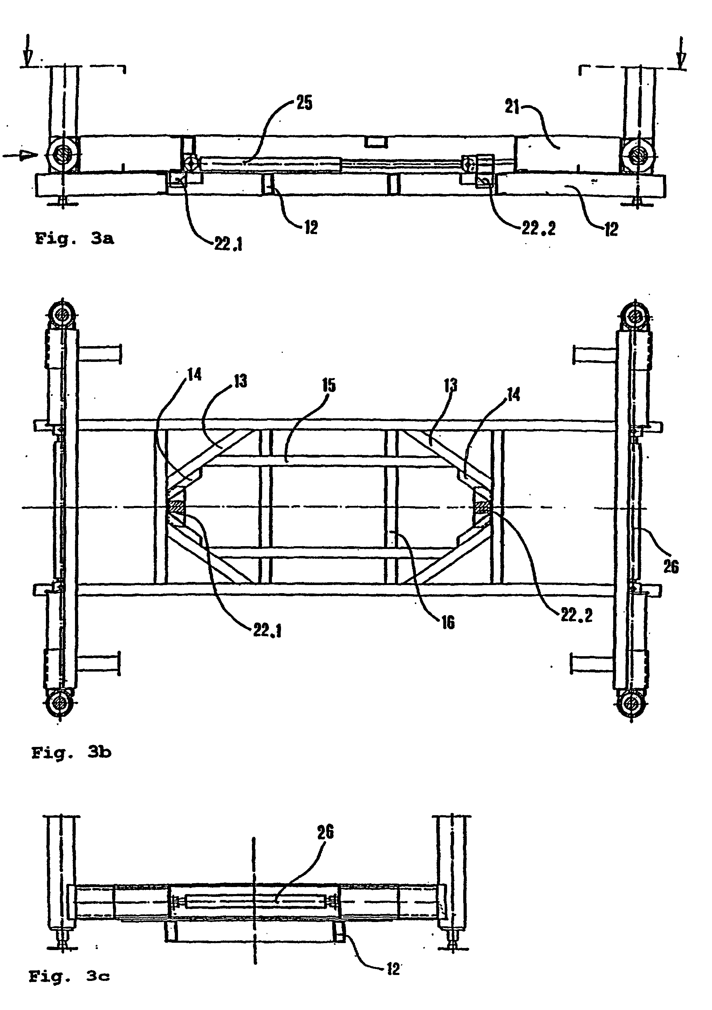

Selon le mode d'exécution de l'ensemble représenté sur les dessins, les pièces de blocage 22 sont au nombre de deux, l'une est fixe et l'autre est mobile, toutes deux solidaires du même châssis. Lesdites pièces de blocage coopèrent avec la structure du châssis opposé. Au regard des figures 2a et 3a, la pièce de blocage mobile 22.2 est mise en mouvement dans le plan du châssis, par rapport à la pièce de blocage fixe 22.1, par l'intermédiaire d'un organe de manoeuvre 25. La pièce de blocage mobile est liée à l'extrémité de cet organe de manoeuvre. Le mouvement de la pièce de blocage mobile se fait parallèlement au plan général de l'un des châssis, et par conséquent à celui aussi du châssis opposé. L'organe de manoeuvre, en l'occurrence, est un vérin hydraulique à double effet.

Au regard des figures 2b et 3b, la structure du châssis opposé, avec laquelle coopèrent les pièces de blocage 22, comporte des traverses supportées par deux longerons. Certaines de ces traverses, les traverses 13, de configuration oblique par rapport aux longerons, supportent deux réceptacles 14 de forme concave. Les traverses obliques 13, les réceptacles 14, ainsi que des traverses longitudinales 15 parallèles aux longerons, constituent des organes destinés au guidage et au positionnement en butée des deux pièces de blocage.

Le guidage puis le positionnement du châssis volant 21 sur le véhicule porteur seront terminés lorsque les deux pièces de blocage 22 auront trouvé, en s'écartant relativement l'une de l'autre, leur butée respective au sein des deux réceptacles, cela après avoir longé et s'être appuyées, le cas échéant, sur une ou plusieurs des traverses longitudinales 15 et obliques 13. Le blocage et enfin le verrouillage du châssis volant 21 sur le véhicule porteur sont assurés en maintenant constamment les deux pièces de blocage 22 en butée respectivement au sein des deux réceptacles.

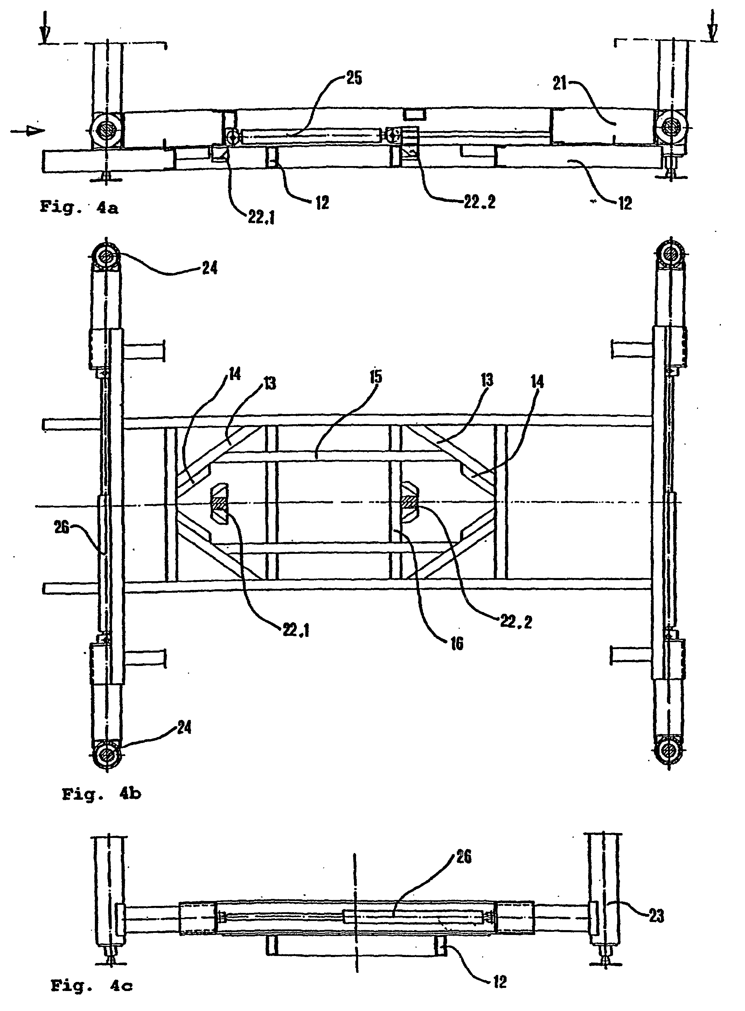

Au regard des figures 4a et 4b, par rétroaction de l'organe de manoeuvre 25, les deux pièces de blocage 22 ont chacune quitté leur logement au sein des réceptacles 14. Lors du déblocage de l'ensemble, la pièce de blocage mobile 22.2, est mise en mouvement et quitte la première son logement, puis, en poursuivant sa course, vient heurter une traverse transversale 16 de la structure du châssis opposé. En s'y appuyant, elle attire vers elle dans un mouvement relatif la pièce de blocage fixe 22.1. Le châssis volant 21, subissant alors un mouvement de translation longitudinal, se trouve ainsi libéré de sa position de blocage.

Selon une variante d'exécution, non représentée sur les dessins, l'ensemble comporte deux pièces de blocage 22, solidaires d'un même châssis et toutes deux mobiles par rapport à ce châssis. Lesdites pièces de blocage coopèrent avec la structure du châssis opposé. Chacune des deux pièces est mise en mouvement, par rapport au châssis avec lequel elles sont solidaires, par l'intermédiaire d'un ou de deux organes de manoeuvre 25, eux-mêmes solidaires du même châssis. Dans le cas où l'on emploie deux organes de manoeuvre, l'une de leurs extrémités supporte une pièce de blocage, l'autre extrémité étant fixée au châssis. Dans le cas où l'on emploie un seul organe de manoeuvre, chacune des extrémités de cet organe supporte l'une des deux pièces de blocage, l'organe de manoeuvre étant fixé au châssis par toute autre de ses parties. Le mouvement des deux pièces de blocage se fait parallèlement au plan général de l'un des châssis, et par conséquent à celui aussi du châssis opposé. De préférence un seul organe de manoeuvre est employé, cet organe peut être un vérin hydraulique à double effet.

Tel que définies ci-dessus, les pièces de blocage 22 sont agencées pour se déplacer par rapport à des réceptacles 14 fixes, mais bien entendu, l'ensemble selon l'invention peut aussi être réalisé en prévoyant tous réceptacles mobiles, en forme de guide et de logement, destinés à coopérer avec des pièces de blocages fixes.

Le guidage et le positionnement, puis le blocage et le verrouillage, s'effectuent comme dans le cas du dispositif précédent. Il en est de même pour les opérations inverses.

Au regard des différentes figures, l'ensemble comprend un équipement de carrosserie 2 qui comporte des béquilles télescopiques 23, déplaçables latéralement. Il est superflu de décrire très en détail ces béquilles et leurs propriétés, dans la mesure où pratiquement tous les camions-grues sont équipés de tels systèmes pour établir l'assiette et la stabilité de la grue avant utilisation. Ces béquilles sont disposées le long des faces latérales de l'équipement de carrosserie, à proximité des coins de l'équipement de carrosserie et sont fixées sur ledit châssis volant. Un moyen de commande est agencé de façon telle qu'il permet le réglage du déploiement, séparé ou concomitant, de chaque béquille. Ce moyen de commande comporte un vérin 24 hydraulique à double effet. De plus, le déplacement latéral des béquilles, ainsi que son amplitude, est assuré par au moins un vérin 26 hydraulique à double effet.

De préférence, le châssis avec lequel les pièces de blocage 22 sont solidaires est le châssis volant 21 de l'équipement de carrosserie 2, alors que la structure avec laquelle ces pièces coopèrent est celle du faux-châssis porteur 12 du véhicule 1.

La présente invention permet ainsi la réalisation d'un ensemble comprenant un équipement de carrosserie amovible adaptable sur tout véhicule, comportant un châssis porteur, que ce soit un véhicule porteur autotracté qu'il soit à traction avant ou à traction arrière, par exemple un châssis-cabine, ou un attelage, par exemple un châssis-remorque.

La présente invention est destinée en premier lieu à la réalisation d'ensembles comportant des équipements de carrosserie amovibles comprenant des installations sophistiquées et/ou fragiles.

On peut citer par exemple, comme équipement de carrosserie, toute cellule d'assistance à la protection civile ou militaire, telles que des cellules d'assistance médicale, des cellules d'assistance pour incendie ou des cellules d'assistance en cas d'alerte chimique. Ce peut être aussi des cellules jouant le rôle de poste de commandement, d'hôpital de campagne, de sanitaires, de bureaux, de logements.

La présente invention est également destinée à la réalisation d'ensembles comprenant toute autre sorte d'équipements de carrosserie plus ou moins élaborés. On peut citer par exemple, et cette liste n'est pas limitative, aussi bien des superstructures, des bennes, des caisses ou des conteneurs, tels que des caisses frigorifiques, des caisses de déménagement, mais aussi des citernes ou des cuves pour produits chimiques, des malaxeurs de ciment, des porte-voitures ou des bétaillères.

On va décrire ci-après de façon détaillée le mode d'exécution de l'ensemble selon l'invention représenté sur les dessins.

Comme cela est représenté à la figure 1a, le véhicule porteur 1 est en attente de chargement. Selon la figure 1b, l'équipement de carrosserie 2 repose alors à même le sol en s'appuyant sur ses quatre béquilles 23 rétractées. En regardant la vue arrière représentée à la figure 1d, on peut constater que les béquilles 23 ont été préalablement écartées, ce qui facilitera l'accès du véhicule porteur.

En déployant les béquilles télescopiques 23, l'équipement de carrosserie est soulevé du sol. Le véhicule effectue alors une marche arrière, pénétrant sous l'équipement de carrosserie en s'introduisant entre les béquilles, comme cela est représenté aux figures 1c et 1d.

On peut relever que, du fait que l'écartement des béquilles télescopiques 23 est supérieur à la largeur de l'équipement de carrosserie, l'angle d'entrée toléré est nettement plus grand que dans le cas de l'approche sous le conteneur équipé de béquilles pivotantes, dont l'écartement correspond à la largeur du conteneur.

Une grande latitude de placement du véhicule porteur est d'autre part permise, le dispositif d'arrimage se chargeant ensuite, comme on le verra plus loin, de guider puis de positionner, de bloquer et de verrouiller l'équipement de carrosserie dans la position adéquate prédéterminée.

Une fois le véhicule porteur placé sous l'équipement de carrosserie, les quatre béquilles 23 sont ensuite rétractées au moyen de vérins 24. L'équipement de carrosserie redescend et son châssis volant 21 vient se poser sur le faux-châssis porteur 12.

Le dispositif d'arrimage peut alors être mis en action. Ce dispositif comporte deux pièces de blocage 22, toute deux solidaires du châssis volant 21, mais l'une est fixe et l'autre pas. Ces pièces de blocage coopèrent avec ce faux-châssis porteur 12. Les figures 2a à 2c présentent en détail l'agencement de chacun des éléments de ce dispositif.

Selon la figure 2a, le châssis volant 21 repose sur le faux-châssis porteur 12 mais ne se trouve pas encore dans sa position prédéterminée d'arrimage. Ce châssis volant 21 comporte un vérin 25 permettant de régler l'écartement entre les deux pièces de blocage 22. L'une des extrémités de ce vérin est fixée à demeure sur l'une des traverses de ce châssis volant 21 en une position prédéterminée située sur l'axe médian de ce châssis. Le mouvement de ce vérin s'effectue parallèlement au plan général de ce châssis volant 21, le long de l'axe médian de ce châssis. La pièce de blocage 22.1 est fixée à demeure sur une traverse du châssis volant 21 en une position prédéterminée le long du même axe médian, alors que la pièce de blocage 22.2 est solidaire de l'extrémité mobile du vérin 25. Les deux pièces de blocage 22 font saillie et se trouvent principalement dans le plan général du faux-châssis porteur 12.

Comme cela est représenté sur la figure 2b, le faux-châssis porteur 12 comporte des traverses, fixées sur deux longerons et agencées pour coopérer avec les deux pièces de blocage 22. A cet effet, les traverses obliques 13 supportent respectivement deux réceptacles 14, de forme concave, en l'occurrence de forme en V. Les traverses obliques 13 et ces deux réceptacles 14 configurent les organes destinés au guidage et au positionnement des deux pièces de blocage 22. Les réceptacles ainsi définis se trouvent tous deux sur l'axe médian du faux-châssis porteur.

Au moment de charger l'équipement de carrosserie sur le véhicule porteur, l'écartement entre les deux pièces de blocage 22 est minimum comme cela est représenté à la figure 2b. le vérin 25 permet de régler cet écartement en position rapprochée comme cela est représenté sur les figures 2a et 2b.

On constate, selon la figure 2c, que les béquilles télescopiques 23 ont été rétractées, grâce aux vérins 24. Les béquilles n'ont en revanche pas encore été rapprochées l'une de l'autre. Le vérin 26, supporté par les longerons du châssis volant 21 et reliant deux des béquilles et qui rapproche ou écarte les béquilles, est ici représenté en position déployée.

Le vérin 25 est progressivement déployé et les pièces de blocage 22 s'écartent l'une de l'autre. Elles viennent, le cas échéant, au contact des traverses 13 et 15 et se logent progressivement dans chacun des deux réceptacles 14, ceci en longeant ces traverses, jusqu'à ce que les deux pièces de blocage atteignent leur butée.

Au cours de cette opération, le châssis volant 21, solidaire des deux pièces de blocage 22, est guidé progressivement en suivant le mouvement de ces deux pièces, entraînant avec lui l'équipement de carrosserie auquel il est fixé. Le châssis volant 21 trouve sa place d'arrimage sur le faux-châssis porteur 12, en glissant sur ce dernier. Dans cette configuration particulière, représentée sur les figures 3a à 3c, les médianes respectives du châssis volant 21 et du faux-châssis porteur 12 coïncident. Afin de réduire les frottements survenant lors du glissement du châssis volant 21 sur le faux-châssis porteur 12, des revêtements spéciaux autolubrifiant, à base par exemple de polyamides tels que le revêtement Ertalon™ de type LFX PA 6G, ont été appliqués, en particulier sur les parties du châssis volant 21 entrant en contact avec le faux-châssis porteur 12.

Comme cela est représenté sur les figures 3a et 3b, le vérin 25 est déployé et maintient les pièces de blocage 22 dans leur réceptacle respectif. L'équipement de carrosserie est alors bloqué et verrouillé sur le faux-châssis porteur 12. Les béquilles 23 peuvent enfin être ramenées latéralement vers le châssis volant 21 en rétractant le vérin 26 comme cela est représenté à la figure 3c.

Le véhicule, portant son équipement de carrosserie, est alors prêt à circuler.

Afin de réaliser le déchargement de l'équipement de carrosserie, on effectue les étapes inverses de chacune des opérations précédentes, dans l'ordre décrit ci-dessous, en se référant en particulier aux figures 4a et 4b.

On déploie, dans un premier temps, les vérins 26 afin d'écarter latéralement les béquilles 23 du châssis volant 21. Ensuite, on rétracte le vérin 25 afin de libérer de leur réceptacle tout d'abord la pièce de blocage 22.2 puis, lorsque cette dernière vient s'appuyer sur la traverse transversale 16 du faux-châssis porteur 12, la pièce de blocage 22.1, débloquant ainsi l'équipement de carrosserie. Enfin, on déploie chacune des béquilles télescopiques en actionnant les vérins 24. Les béquilles prennent alors appui sur le sol et soulèvent l'équipement de carrosserie comme cela est représenté à la figure 4. Selon la nature du sol, plus ou moins accidenté, l'amplitude du déploiement de chacune des béquilles peut être réglée de façon à maintenir, si cela est nécessaire, l'équipement de carrosserie dans une position parfaitement horizontale. Une fois l'équipement de carrosserie levé, le véhicule porteur est dégagé en effectuant une marche avant. Puis l'équipement de carrosserie 2 peut être amené, selon les nécessités, soit à même le sol, soit à une hauteur de travail choisie, mais toujours avec la possibilité de conserver une assiette horizontale.

Chacun des vérins mis en oeuvre lors du chargement, du guidage et du positionnement est commandé par un système d'électrovannes, lesquelles sont alimentées par une pompe hydraulique qui est actionnée par un moteur électrique. Un système de sécurité peut être installé de manière à parer à toute défaillance de fonctionnement, soit du moteur, soit de la pompe ou des électrovannes. Chacune des électrovannes peut être commandée à distance grâce à un boîtier de commande. Ce boîtier peut être muni d'un système de sécurité obligeant de réaliser chacune des opérations présentées ci-dessus dans l'ordre prescrit.

Le dispositif d'arrimage équipant le véhicule permet le guidage et le placement, en particulier, d'un équipement de carrosserie, d'une longueur de 3000 mm et d'une largeur de 2000 mm, sur un châssis porteur en admettant une correction latérale, gauche ou droite, de 100 mm, ainsi qu'une correction longitudinale de 200 mm.

La seule condition à respecter lors du placement du véhicule porteur sous l'équipement de carrosserie est-que les deux pièces de blocage doivent se trouver quelque part à l'aplomb du périmètre intérieur défini par les traverses 13, 15 et 16, ainsi que le réceptacle 14 du faux-châssis porteur 12.

Par la latitude permise pour placer le véhicule porteur sous l'équipement de carrosserie, la personne conduisant le véhicule, qui peut être en l'occurrence une personne dont la fonction principale est de participer aux opérations de protection civile ou militaire, peut mettre en oeuvre le dispositif d'arrimage. Aucune formation particulière à la conduite du véhicule n'est nécessaire.

Cette même personne, placée en une position quelconque aux abords de l'équipement de carrosserie, effectue toutes les opérations de chargement et de déchargement sans avoir recours à une aide extérieure, et cela grâce à l'utilisation d'un boîtier de commande à distance non représenté sur le dessin. Aucune autre manipulation n'est requise.

L'équipement de carrosserie peut disposer de ses propres moyens de commande des différents éléments du dispositif d'arrimage ou même de chargement, que ce soit la pompe hydraulique et/ou le moteur. Cela lui assure une grande autonomie de mise en place et évite de nécessairement faire appel à l'assistance que le véhicule porteur, par exemple, pourrait lui offrir.

L'absence de mouvements brusques, ainsi que la possibilité de maintenir l'équipement en position horizontale quelle que soit la nature du sol, plus ou moins accidenté, et sa déclivité, sont appropriés pour la manipulation d'installations sophistiquées et/ou fragiles. De plus, cet équipement peut être déplacé verticalement jusqu'à tout niveau en rapport avec la fonction de travail.

Le dispositif d'arrimage peut être mis en oeuvre sur une grande variété de véhicules, qu'il s'agisse de véhicules porteurs ou de remorques, en combinaison avec un grand nombre d'équipements de carrosserie, quelles que soient leurs fonctions. De plus, tout véhicule à plate-forme plate disponible dans le commerce et tout équipement de carrosserie disponible dans le commerce peuvent facilement être adaptés pour recevoir ce dispositif d'arrimage.

Lorsqu'un centre d'intervention dispose de différentes cellules spécialement équipées pour des missions spécifiques, un même véhicule porteur peut assurer le transport et le déchargement de n'importe laquelle de ces cellules. Comme la manoeuvre est simple, tout personnel peut l'exécuter, quelle que soit sa spécialisation.

Enfin, on peut relever que, par le faible encombrement de ce dispositif, placé essentiellement au-dessous de l'équipement de carrosserie, toute la surface utile de la plate-forme du véhicule porteur peut être utilisée.

## Revendications

1. Ensemble formé d'une part d'un équipement de carrosserie amovible (2), disposé sur un châssis volant (21), et d'autre part d'un véhicule (1) comportant un châssis porteur (11), l'ensemble comprenant un dispositif de levage (23, 24) du châssis volant et un dispositif d'arrimage comportant au moins deux pièces de blocage (22) et des organes (13, 14, 15) avec lesquels lesdites pièces de blocage sont destinées à coopérer, chacune des dites pièces de blocage étant solidaire de l'un quelconque des châssis, ledit organe avec lequel ladite pièce coopère étant solidaire du châssis opposé, **caractérisé en ce que** l'ensemble est agencé de façon que la composante verticale du positionnement du châssis volant (21) sur le châssis porteur (11) soit traitée exclusivement par le dispositif de levage (23, 24) alors que les composantes du positionnement s'inscrivant dans le plan commun aux deux châssis sont traitées exclusivement par la mise en action des éléments du dispositif d'arrimage (22, 13, 14, 15) lorsque les deux châssis sont au contact l'un de l'autre.

2. Ensemble selon la revendication 1, **caractérisé en ce que** l'une au moins (22.1) des pièces de blocage se trouve dans une position prédéterminée fixe et que l'une au moins (22.2) des autres pièces de blocage (22) est mobile par rapport à ladite pièce fixe.

3. Ensemble selon la revendication 2, **caractérisée en ce que** les deux pièces de blocage (22) sont solidaires du même châssis, l'une (22.2) des deux pièces de blocage (22) étant mise en mouvement par rapport à l'autre pièce (22.1), qui est fixe, par l'intermédiaire d'un organe de manoeuvre (25).

4. Ensemble selon la revendication 1, **caractérisé en ce que** les deux pièces de blocage (22) sont solidaires d'un même châssis, mobiles par rapport audit châssis par l'intermédiaire d'un organe de manoeuvre.

5. Ensemble selon l'une des revendications précédentes, **caractérisé en ce que** le châssis avec lequel coopèrent les pièces de blocage (22) comporte des traverses (13) supportant deux réceptacles (14), de forme concave, configurant des organes destinés à la fois au guidage et au positionnement en butée des pièces de blocage.

6. Ensemble selon l'une des revendications précédentes, **caractérisé en ce que** le dispositif de levage est solidaire du châssis volant (21) et comporte des béquilles télescopiques (23), déplaçables latéralement.

7. Ensemble selon la revendication 6, **caractérisé en ce qu'**il comporte un moyen de commande permettant le réglage du déploiement de chaque béquille télescopique séparément.

8. Ensemble selon l'une des revendications 6 et 7, **caractérisé en ce que** les béquilles sont disposées le long des faces latérales de l'équipement de carrosserie, à proximité des coins dudit équipement de carrosserie.

9. Ensemble selon l'une des revendications précédentes, **caractérisé en ce que** les mouvements des béquilles et des pièces de blocage sont commandés à distance au moyen d'un système de commande.

10. Ensemble selon l'une des revendications précédentes, **caractérisé en ce que** le châssis avec lequel les pièces de blocage (22) sont solidaires est le châssis volant (21) de l'équipement de carrosserie (2) et **en ce que** la structure avec laquelle coopèrent lesdites pièces de blocage est celle du châssis porteur (11) du véhicule (1).

11. Ensemble selon l'uns des revendications précédentes, **caractérisé en ce que** le châssis porteur est conformé d'un seul tenant, non extensible.

12. Equipement de carrosserie amovible, disposé sur un châssis volant (21), **caractérisé en ce qu'**il comporte une partie des éléments du dispositif d'arrimage de l'ensemble selon la revendication 1.

13. Equipement de carrosserie selon la revendication 12, **caractérisé en ce qu'**il comporte en outre des béquilles télescopiques (23), déplaçables latéralement.

14. Véhicule comportant un châssis porteur (11), **caractérisé en ce que** le châssis porteur comporte une partie des éléments du dispositif d'arrimage de l'ensemble selon la revendication 1.

15. Véhicule selon la revendication 14, **caractérisé en ce que** le châssis porteur est conformé d'un seul tenant, non extensible.

16. Procédé d'accouplement d'un équipement de carrosserie amovible (2), disposé sur un châssis volant (21), avec un véhicule comportant un châssis porteur (11), l'ensemble comportant un dispositif de levage (23, 24) du châssis volant et au moins deux pièces de blocage (22), chacune des dites pièces de blocage étant solidaire de l'un quelconque des châssis et agencée de façon à coopérer avec des organes (13, 14, 15) du châssis opposé lorsque les deux parties de l'ensemble se trouvent l'une par rapport à l'autre dans une position autorisant la mise en coopération des pièces de blocage avec lesdits organes du châssis opposé, lesdits organes (13, 14, 15) du châssis opposé étant constitués par des traverses (13) supportant deux réceptacles (14) de forme concave, ledit procédé comprenant la succession des étapes suivantes:
i) levage du châssis volant de façon à l'amener à un niveau supérieur à celui du châssis porteur du véhicule;
ii) déplacement du véhicule de façon à amener le châssis porteur en-dessous du châssis volant dans une position telle que les deux pièces de blocage se trouvent respectivement à l'aplomb de chacun des périmètres intérieurs constitués par les organes avec lesquelles elles doivent coopérer;
iii) pose du châssis volant sur le châssis porteur; et
iv) déplacement des pièces de blocage l'une par rapport à l'autre de façon à imprimer à l'équipement de carrosserie les mouvements nécessaires à son positionnement jusqu'en position de blocage final.

## Patentansprüche

1. Anordnung, die einerseits von einer abnehmbaren Karosserieausrüstung (2), die auf einem beweglichen Rahmen (21) angeordnet ist, und andererseits von einem Fahrzeug (1), das einen Tragrahmen (11) aufweist, gebildet wird, wobei die Anordnung eine Vorrichtung zum Anheben (23, 24) des beweglichen Rahmens und eine Kuppelvorrichtung umfaßt, die wenigstens zwei Arretierstücke (22) und Organe (13, 14, 15) aufweist, mit denen diese Arretierstücke zusammenwirken sollen, wobei jedes dieser Arretierstücke mit irgendeinem der Rahmen fest verbunden ist, wobei das Organ, mit dem dieses Stück zusammenwirkt, mit dem gegenüberliegenden Rahmen fest verbunden ist, **dadurch gekennzeichnet, daß** die Anordnung so gestaltet ist, daß die vertikale Komponente der Positionierung des beweglichen Rahmens (21) auf dem Tragrahmen (11) ausschließlich von der Hebevorrichtung (23, 24) ausgeführt wird, während die Komponenten der Positionierung, welche die gemeinsame Ebene der beiden Rahmen betreffen, ausschließlich durch die Betätigung der Elemente der Kuppelvorrichtung (22, 13, 14, 15) ausgeführt werden, wenn die beiden Rahmen miteinander in Berührung sind.

2. Anordnung nach Anspruch 1, **dadurch gekennzeichnet, daß** sich wenigstens eines (22.1) der Arretierstücke in einer vorbestimmten ortsfesten Position befindet und daß wenigstens eines (22.2) der weiteren Arretierstücke (22) in Bezug auf dieses ortsfeste Stück beweglich ist.

3. Anordnung nach Anspruch 2, **dadurch gekennzeichnet, daß** die beiden Arretierstücke (22) mit demselben Rahmen fest verbunden sind, wobei das eine (22.2) der beiden Arretierstücke (22) in Bezug auf das andere Stück (22.1), das ortsfest ist, mittels eines Betätigungsorgans (25) bewegt wird.

4. Anordnung nach Anspruch 1, **dadurch gekennzeichnet, daß** die beiden Arretierstücke (22) mit einem selben Rahmen fest verbunden und in Bezug auf diesen Rahmen mittels eines Betätigungsorgans beweglich sind.

5. Anordnung nach einem der vorhergehenden Ansprüche, **dadurch gekennzeichnet, daß** der Rahmen, mit dem die Arretierstücke (22) zusammenwirken, Streben (13) umfaßt, die zwei Aufnahmen (14) von konkaver Form tragen, welche die Organe bilden, die zugleich zur Führung und Anschlagpositionierung der Arretierstücke bestimmt sind.

6. Anordnung nach einem der vorhergehenden Ansprüche, **dadurch gekennzeichnet, daß** die Hebevorrichtung mit dem beweglichen Rahmen (21) fest verbunden ist und ausfahrbare Stützfüße (23) umfaßt, die seitlich verschiebbar sind.

7. Anordnung nach Anspruch 6, **dadurch gekennzeichnet, daß** sie ein Mittel zur Betätigung aufweist, das die gesonderte Einstellung der Ausfahrlänge jedes ausfahrbaren Stützfußes ermöglicht.

8. Anordnung nach einem der Ansprüche 6 und 7, **dadurch gekennzeichnet, daß** die Stützfüße längs der Seitenflächen der Karosserieausrüstung in Nähe der Ecken dieser Karosserieausrüstung angeordnet sind.

9. Anordnung nach einem der vorhergehenden Ansprüche, **dadurch gekennzeichnet, daß** die Bewegungen der Stützfüße und der Arretierstücke mittels eines Steuerungssystems ferngesteuert werden.

10. Anordnung nach einem der vorhergehenden Ansprüche, **dadurch gekennzeichnet, daß** der Rahmen, mit dem die Arretierstücke (22) fest verbunden sind, der bewegliche Rahmen (21) der Karosserieausrüstung (2) ist und daß die Struktur, mit der diese Arretierstücke zusammenwirken, die des Tragrahmens (11) des Fahrzeugs (1) ist.

11. Anordnung nach einem der vorhergehenden Ansprüche, **dadurch gekennzeichnet, daß** der Tragrahmen aus einem Stück gebildet und nicht ausziehbar ist.

12. Abnehmbare Karosserieausrüstung, die auf einem beweglichen Rahmen (21) angeordnet ist, **dadurch gekennzeichnet, daß** sie einen Teil der Elemente der Kuppelvorrichtung der Anordnung nach Anspruch 1 umfaßt.

13. Karosserieausrüstung nach Anspruch 12, **dadurch gekennzeichnet, daß** sie außerdem seitlich verschiebbare ausziehbare Stützfüße (23) umfaßt.

14. Fahrzeug, das einen Tragrahmen (11) aufweist, **dadurch gekennzeichnet, daß** der Tragrahmen einen Teil der Elemente der Kuppelvorrichtung der Anordnung nach Anspruch 1 umfaßt.

15. Fahrzeug nach Anspruch 14, **dadurch gekennzeichnet, daß** der Tragrahmen aus einem Stück gebildet und nicht ausziehbar ist.

16. Verfahren zur Kupplung einer abnehmbaren Karosserieausrüstung (2), die auf einem beweglichen Rahmen (21) angeordnet ist, mit einem Fahrzeug, das einen Tragrahmen (11) aufweist, wobei die Anordnung eine Vorrichtung zum Anheben (23, 24) des beweglichen Rahmens und wenigstens zwei Arretierstücke (22) umfaßt, wobei jedes dieser Arretierstücke mit irgendeinem der Rahmen fest verbunden ist und so gestaltet ist, daß es mit Organen (13, 14, 15) des gegenüberliegenden Rahmens zusammenwirkt, wenn sich die beiden Teile der Anordnung in Bezug aufeinander in einer Position befinden, welche das Zusammenwirken der Arretierstücke mit diesen Organen des gegenüberliegenden Rahmens erlaubt, wobei diese Organe (13, 14, 15) des gegenüberliegenden Rahmens von Streben (13) gebildet werden, die zwei Aufnahmen (14) von konkaver Form tragen, wobei das Verfahren die Aufeinanderfolge der folgenden Schritte umfaßt:
i) Anheben des beweglichen Rahmens derart, daß dieser auf eine Höhe gebracht wird, die größer ist als die des Tragrahmens des Fahrzeugs;
ii) Verschieben des Fahrzeugs derart, daß der Tragrahmen unter dem beweglichen Rahmen in eine solche Position gebracht wird, daß sich die beiden Arretierstücke jeweils in der Lotrechten jeder der inneren Begrenzungen befinden, die von den Organen, mit denen sie zusammenwirken sollen, gebildet werden;
iii) Absetzen des beweglichen Rahmens auf dem Tragrahmen; und
iv) Verschieben der Arretierstücke in Bezug aufeinander derart, daß der Karosserieausrüstung die Bewegungen verliehen werden, die zu ihrer Positionierung bis in die Arretier-Endposition erforderlich sind.

## Claims

1. An assembly formed on the one hand by a removable item of bodywork equipment (2), disposed on a detachable chassis (21), and on the other hand by a vehicle (1) comprising a carrier chassis (11), the whole comprising a lifting device (23, 24) for the detachable chassis and a securing device comprising at least two locking parts (22) and members (13, 14, 15) with which the said locking parts are intended to cooperate, each of the said locking parts being fixed to either one of the chassis, the said member with which the said part cooperates being fixed to the opposite chassis, **characterised in that** the assembly is arranged so that the vertical component for positioning the detachable chassis (21) on the carrier chassis (11) is treated solely by the lifting device (23, 24) whilst the components of the positioning fitting in the plane common to the two chassis are treated solely by the actuation of the components of the fixing device (22, 13, 14, 15) when the two chassis are in contact with each other.

2. An assembly according to claim 1, **characterised in that** at least one (22.1) of the locking parts is in a predetermined fixed position and **in that** at least one (22.2) of the other locking parts (22) is able to move with respect to the said fixed part.

3. An assembly according to claim 2, **characterised in that** the two locking parts (22) are fixed to the same chassis, one (22.2) of the two locking parts (22) being moved with respect to the other part (22.1), which is fixed, by means of a manoeuvring member (25).

4. An assembly according to claim 1, **characterised in that** the two locking parts (22) are fixed to the same chassis, able to move with respect to the said chassis by means of a manoeuvring member.

5. An assembly according to one of the preceding claims, **characterised in that** the chassis with which the locking parts (22) cooperate comprises cross-members (13) supporting two receptacles (14), concave in shape, configuring members intended both for guiding the locking parts and for positioning them in abutment.

6. An assembly according to one of the preceding claims, **characterised in that** the lifting device is fixed to the detachable chassis (21) and has telescopic props (23), able to be moved laterally.

7. An assembly according to claim 6, **characterised in that** it comprises a control means for adjusting the deployment of each telescopic prop separately.

8. An assembly according to one of claims 6 and 7, **characterised in that** the props are disposed along the lateral faces of the bodywork equipment, close to the corners of the said bodywork equipment.

9. An assembly according to one of the preceding claims, **characterised in that** the movements of the props and of the locking parts are remote-controlled by means of a control system.

10. An assembly according to one of the preceding claims, **characterised in that** the chassis to which the locking parts (22) are fixed is the detachable chassis (21) of the bodywork equipment (2) and **in that** the structure with which the said locking parts cooperate is that of the carrier chassis (11) of the vehicle (1).

11. An assembly according to one of the preceding claims, **characterised in that** the carrier chassis is formed in a single piece which is not extensible.

12. A removable item of bodywork equipment, disposed on a detachable chassis (21), **characterised in that** it comprises some of the elements of the device for securing the assembly according to claim 1.

13. An item of bodywork equipment according to claim 12, **characterised in that** it further comprises telescopic props (23), able to be moved laterally.

14. A vehicle comprising a carrier chassis (11), **characterised in that** the carrier chassis comprises some of the elements of the fixing device of the assembly according to claim 1.

15. A vehicle according to claim 14, **characterised in that** the carrier chassis is formed in a single piece which is not extensible.

16. A method of coupling a removable item of bodywork equipment (2), disposed on a detachable chassis (21), with a vehicle having a carrier chassis (11), the assembly comprising a device (23, 24) for lifting the detachable chassis and at least two locking parts (22), each of the said locking parts being fixed to either one of the chassis and arranged so as to cooperate with members (13, 14, 15) on the opposite chassis when the two parts of the assembly are situated with respect to each other in a position allowing the cooperation of the locking parts with the said members on the opposite chassis, the said members (13, 14, 15) on the opposite chassis consisting of cross-members (13) supporting two concave-shaped receptacles (14), the said method comprising the following series of steps:
i) lifting the detachable chassis so as to bring it to a level higher than that of the carrier chassis of the vehicle;
ii) moving the vehicle so as to bring the carrier chassis below the detachable chassis in a position such that the two locking parts are situated respectively vertically in line with each of the internal perimeters consisting of the members with which they have to cooperate;
iii)placing the detachable chassis on the carrier chassis; and
iv) moving the locking parts with respect to each other so as to give the bodywork equipment the movement necessary for its positioning until it is in the final locking position.
